# EUROPÄISCHE PATENTSCHRIFT

(11) **EP 1 179 659 B1**
(45) Veröffentlichungstag und Bekanntmachung des Hinweises auf die Patenterteilung: **26.01.2005**
(21) Anmeldenummer: 01116880.4
(22) Anmeldetag: 11.07.2001
(51) Int. Cl.: F01N 3/38, F01N 3/20, F01N 3/36

(54) **Vorrichtung zur Entzündung brennbaren Gasgemisches für die Abgasanlage einer Brennkraftmaschine und entsprechende Abgasanlage**
Arrangement for ignition of combustible gas mixture for the exhaust gas system of an internal combustion engine and corresponding exhaust gas system
Ensemble pour allumage des gaz combustibles pour un système d'échappement d'un moteur à combustion interne et système d'échappement correspondant

(30) Priorität: 09.08.2000 DE 10038743
(43) Veröffentlichungstag der Anmeldung: 13.02.2002
(73) Patentinhaber: Dr.Ing. h.c.F. Porsche Aktiengesellschaft, 70435 Stuttgart (DE); AUDI AG, 85045 Ingolstadt (DE); Bayerische Motoren Werke Aktiengesellschaft, 80809 München (DE); Volkswagen Aktiengesellschaft, 38436 Wolfsburg (DE)
(72) Erfinder: Huynh, Ngoc-Hoa, 71229 Leonberg (DE); Salzer, Lorenz, 71277 Rutesheim (DE); Gerl, Peter, 73732 Esslingen (DE)

(56) Entgegenhaltungen:
- GB-A- 2 134 407
- GB-A- 2 280 128
- US-A- 5 342 591
- US-A- 5 720 609

## Beschreibung

### Stand der Technik

Die vorliegende Erfindung betrifft eine Abgasanlage mit einer Vorrichtung zur Entzündung eines brennbaren Gasgemischs.

Bei der Abgasnachbehandlung von einer Brennkraftmaschine eines Kraftfahrzeuges hat die Reduzierung der Schadstoffe im Abgas während dem Kaltstart und Warmlauf der Brennkraftmaschine als aussichtsreichstes Potenzial zur Schadstoffreduzierung Vorrang. Unter anderem sind hierzu Verfahren bekannt, wobei beim Kaltstart ein brennfähiges Luft-/Kraftstoffgemisch im Abgasstrang erzeugt wird und der im Abgas enthaltene Heizwert zur schnellen Erwärmung der schadstoffumsetzenden Katalysatoren auf deren Starttemperatur bzw. Einsatztemperatur genutzt wird. Dies geschieht dadurch, dass das brennfähige Luft-/Kraftstoffgemisch an geeigneter Stelle in unmittelbarer Nähe vom Katalysator erneut gezündet wird, wie dies beispielsweise aus der GB 2 280 128 bekannt ist.

Die zur Entzündung eines solchen brennbaren Gasgemischs bekannten Zündvorrichtungen, z. B. Zündkerzen oder Glühkerzen, sind für diese Aufgabe ungeeignet oder nur beschränkt verwendbar, weil unter den herrschenden Umgebungsbedingungen, wie z.B. niedriger Druck, niedrige Temperatur und hoher Anteil von Erdgasen, eine zuverlässige Zündung und vollständige Verbrennung nicht gewährleistbar ist.

Daher ist es Aufgabe der vorliegenden Erfindung, eine Vorrichtung zur Entzündung eines brennbaren Gasgemischs für die Abgasanlage einer Brennkraftmaschine zu schaffen, welche die Zündung zuverlässig durchführen kann und eine hohe Wahrscheinlichkeit für eine vollständige Verbrennung bietet.

### Vorteile der Erfindung

Die erfindungsgemäße Abgasanlage weist den Vorteil auf, daß eine zuverlässige Zündung gewährleitet ist und daher die Aufwärmzeit des Katalysators und die Abgasemission drastisch reduzierbar sind. Der notwendige Strombedarf ist gering, da nur der Heizdraht und nicht das gesamte Trägermaterial beheizt werden muß.

Die der vorliegenden Erfindung zu Grunde liegende Idee, besteht darin, als Zündvorrichtung eine gitterförmige Struktur aus Heizdraht bzw. Widerstandsdraht quer zur Hauptströmungsachse im Abgasstrang anzuordnen und elektrisch auf eine Temperatur zu beheizen, welche geeignet ist, das anströmende brennbare Gasgemisch zu entzünden. Die Materialstärke des leitfähigen Heizdrahtes ist zweckmäßigerweise so gering wie festigkeitsmäßig möglich zu wählen, um die zu beheizende Wärmekapazität und damit die erforderliche elektrische Stromstärke zu minimieren.

In den Unteransprüchen finden sich vorteilhafte Weiterbildungen und Verbesserungen der Erfindung.

Gemäß einer bevorzugten Weiterbildung umfaßt die Rahmeneinrichtung einen ersten Rahmen und einen im wesentlichen parallel beabstandet dazu angeordneten zweiten Rahmen, welche abwechselnd mit dem Heizdraht bewickelt sind. So läßt sich ein stabiles Heizdrahtgitter bewerkstelligen.

Gemäß einer weiteren bevorzugten Weiterbildung ist der erste Rahmen durch die Stromversorgungseinrichtung mit einem ersten elektrischen Potential (Pluspol) beaufschlagbar und ist der zweite Rahmen mit einem zweiten elektrischen Potential (Erdpotential) beaufschlagbar. Diese Ausgestaltung mit zwei Rahmen sorgt elektrisch für eine Parallelschaltung vieler einzelner Heizdrahtelemente und bietet den Vorteil eines minimierten elektrischen Widerstandes. Weiterhin bewirkt das Abreißen eines Heizdrahtsegments an beliebiger Stelle nicht einen Ausfall der gesamten Zündvorrichtung.

Gemäß einer weiteren bevorzugten Weiterbildung sind der erste und zweite Rahmen durch eine vorzugsweise elastische Isolationseinrichtung voneinander getrennt. Dies schafft die notwendige elektrische Entkopplung und eine mechanische Vorspannung gegen die thermische Ausdehnung.

Gemäß einer weiteren bevorzugten Weiterbildung ist der Heizdraht über an der Rahmeneinrichtung vorgesehene Ösen gefädelt.

Gemäß einer weiteren bevorzugten Weiterbildung ist der Heizdraht über eine federnde Vorspanneinrichtung zum Ausgleich der Wärmeausdehnung vorgespannt.

Gemäß einer weiteren bevorzugten Weiterbildung ist der Heizdraht katalytisch beschichtet. Dies reduziert die Heiztemperatur und unterstützt die Katalysatorwirkung.

Die erfindungsgemäße Abgasanlage mit einer quer zur Strömungsachse des Abgases eingebauten Zündvorrichtung hat eine stromabwärts der Zündvorrichtung angeordnete erste Katalysatoreinrichtung und ein Gehäuse, welches vorzugsweise eine Aufweitung zur Aufnahme der Rahmeneinrichtung aufweist.

Gemäß einer weiteren bevorzugten Weiterbildung ist die Zündvorrichtung derart angeordnet, daß der Strömungsbereich im wesentlichen dem Querschnitt der Katalysatoreinrichtung entspricht. Dies sorgt für eine ganzflächige Aufheizung der Katalysatoreinrichtung.

Gemäß einer weiteren bevorzugten Weiterbildung ist die Zündvorrichtung derart angeordnet, daß sich eine Flammenfront des gezündeten Gasgemischs vor Erreichen der Katalysatoreinrichtung ausbilden kann. Dies sorgt für höchste Wirksamkeit der Vorheizung.

Gemäß einer weiteren bevorzugten Weiterbildung ist die Rahmeneinrichtung an ihrem Umfang mit dem Gehäuse verbunden. Damit ist ein Umströmen der Zündvorrichtung verhindert.

Gemäß einer weiteren bevorzugten Weiterbildung ist stromaufwärts der Zündvorrichtung eine zweite Katalysatoreinrichtung angeordnet. Eine Anordnung der Zündvorrichtung im Gehäuse des Hauptkatalysators im freien Raum zwischen einem ersten und zweiten Monoliten erweist sich als besonders wirksam.

### Zeichnungen

Ein Ausführungsbeispiel der Erfindung ist in den Zeichnungen dargestellt und in der nachfolgenden Beschreibung näher erläutert.

Es zeigen:
- Fig. 1a,b: eine schematische Darstellung einer Vorrichtung gemäß einer bevorzugten Ausführungsform der vorliegenden Erfindung; und
- Fig. 2: eine Ausschnittsvergrößerung der Heizdrahtverankerung der Vorrichtung nach Fig. 1.

### Beschreibung der Ausführungsbeispiele

In den Figuren bezeichnen gleiche Bezugszeichen gleiche oder funktionsgleiche Elemente.

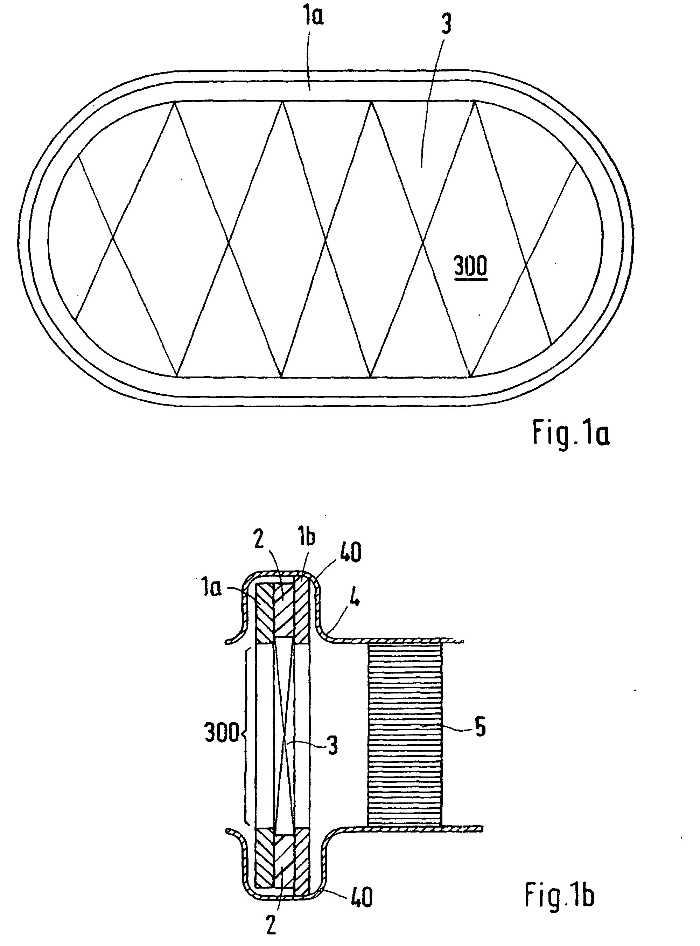

Fig. 1a,b zeigen eine schematische Darstellung einer Vorrichtung gemäß einer bevorzugten Ausführungsform der vorliegenden Erfindung.

In Figur 1 bezeichnen Bezugszeichen 1a und 1b einen ersten und einen zweiten Rahmen aus Metall in Monolithenform, welche getrennt durch eine Isolationseinrichtung 2 auf einander gelegt sind und quasi endlos mit Heizdraht 3 abwechselnd bewickelt sind (in "Racetrackform"). Die Bewicklung bildet einen vom Abgas durchströmbaren Strömungsbereich 300 mit einem Heizdrahtgitter, dessen Maschenweite je nach Anforderungen quasi frei bestimmbar ist.

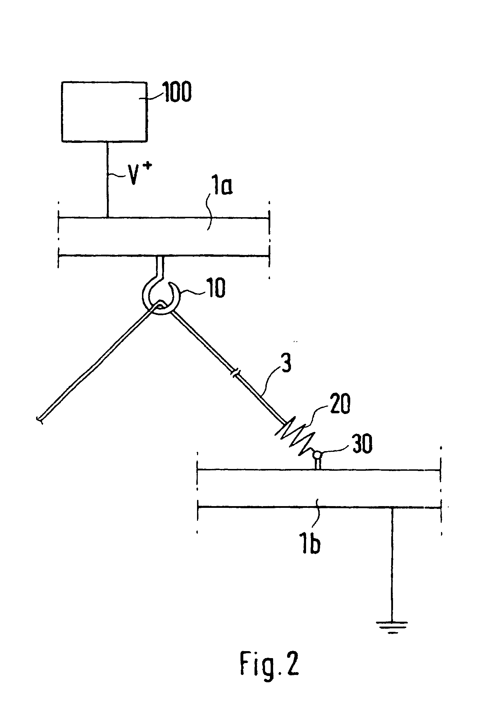

Weiterhin bezeichnet Bezugszeichen 4 ein Gehäuse eines Katalysators 5, welches an geeigneter Stelle vor dem Katalysator 5 eine Aufweitung zur Aufnahme der beiden Rahmen 1a, 1b aufweist. Bei dieser Anordnung entspricht der Strömungsbereich 300 im Wesentlichen dem Querschnitt des Katalysators 5. Der erste Rahmen ist durch eine nicht gezeigte Stromversorgungseinrichtung 100 (vgl. Figur 2) mit einem ersten elektrischen Potential V+ verbindbar, wohingegen der zweite Rahmen 1b an seinem Umfang mit dem Gehäuse 3 vorzugsweise durch Schweißen verbunden ist und daher auf Erdpotential liegt.

Die Zündvorrichtung in Form des Heizdrahtgitters ist derart angeordnet, daß sich eine Flammenfront des gezündeten Gasgemischs vor Erreichen der Katalysatoreinrichtung 5 ausbilden kann. Dies sorgt für höchste Wirksamkeit der Vorheizung und schnelles Erreichen der Anspringtemperatur.

Fig. 2 ist eine Ausschnittsvergrößerung der Heizdrahtverankerung der Vorrichtung nach Fig. 1.

Wie aus Figur 2 erkennbar, sind an dem ersten und zweiten Rahmen 1a, 1b kleine hakenförmige Ösen 10 vorgesehen, über die der Heizdraht 3 gewickelt ist. Am Ende des Heizdrahtes 2 ist eine federne Vorspannungseinrichtung 20, z.B. eine einfache Feder, vorgesehen, welche mit einer am zweiten Rahmen 1b vorgesehenen Verankerung 30 verbunden ist. Diese federne Vorspanneinrichtung 20 sorgt für einen Längenausgleich bei thermischer Ausdehnung des Heizdrahtes 3.

Der Heizdraht 3 wird über die Stromversorgungseinrichtung 300 mit einem derartigen Strom versorgt, dass er eine Oberflächentemperatur von typischer Weise mehreren 100 °C erreicht, um das durchströmende Gasgemisch zu entzünden. Das Gittergeflecht ist derart zu wählen, dass die Zündtemperatur bei einem Luftmassendurchsatz von typischerweise 20 kg/h aufrechterhaltbar ist.

Beim vorliegenden Ausführungsbeispiel ist der Heizdraht selbst beispielsweise mit Platin beschichtet, was eine katalytische Wirkung erzeugt und die Zündtemperatur herabsetzt.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Obwohl die obige Ausführungsform unter Verwendung eines bestimmten zweiteiligen Rahmens erläutert wurde, ist sie darauf nicht beschränkt, und jede geeignete Rahmeneinrichtung kann zum Aufspannen des Heizdraht-Gittergeflechts verwendet werden. Auch ist die Geometrie des Gittergeflechts beliebig an die konkreten Erfordernisse anpassbar.

Auch können mehrere derartige Rahmen im Abgasstrang hintereinander angeordnet sein, falls die Zündwirkung einer einzelnen solchen Zündvorrichtung nicht ausreichend sein sollte.

Schließlich ist die erfindungsgemäße Zündvorrichtung nicht nur für Abgasstränge von Fahrzeug-Brenn-Kraftmaschinen verwendbar, sondern für beliebige Abgaseinrichtungen, welche ein zündbares Gemisch enthalten.

## Patentansprüche

1. Abgasanlage mit einer quer zur Strömungsachse des Abgases eingebauten Zündvorrichtung mit:
einer Rahmeneinrichtung (1a, 1b), welche mit einem Heizdraht (3) bewickelt ist und in einen Abgasstrang (4) der Abgasanlage quer zur Strömungsachse des Abgases einbaubar ist; und
einer Stromversorgungseinrichtung (100, MASSE) zum Versorgen des Heizdrahtes mit elektrischem Strom zum Erzeugen einer vorbestimmten Heizdrahttemperatur;
wobei
die Rahmeneinrichtung (1a, 1b) einen Strömungsbereich (300) definiert, in dem ein Heizdrahtgitter vorgesehen ist.

2. Abgasanlage nach Anspruch 1, **dadurch gekennzeichnet, dass** die Rahmeneinrichtung (1a, 1b) einen ersten Rahmen (1a) und einen im wesentlichen parallel beabstandet dazu angeordneten zweiten Rahmen (1b) umfasst, welche abwechselnd mit dem Heizdraht (3) bewickelt sind.

3. Abgasanlage nach Anspruch 1 oder 2, **dadurch gekennzeichnet, dass** der erste Rahmen (1a) durch die Stromversorgungseinrichtung (100, MASSE) mit einem ersten elektrischen Potential (V+) beaufschlagbar ist und der zweite Rahmen (1b) mit einem zweiten elektrischen Potential (MASSE) beaufschlagbar ist.

4. Abgasanlage nach Anspruch 3, **dadurch gekennzeichnet, dass** der erste und zweite Rahmen (1a, 1b) durch eine vorzugsweise elastische Isolationseinrichtung (2) voneinander getrennt sind.

5. Abgasanlage nach einem der vorhergehenden Ansprüche, **dadurch gekennzeichnet, dass** der Heizdraht (3) über an der Rahmeneinrichtung (1a, 1b) vorgesehene Ösen (10) gefädelt ist.

6. Abgasanlage nach einem der vorhergehenden Ansprüche, **dadurch gekennzeichnet, daß** der Heizdraht (3) über eine federnde Vorspanneinrichtung (30) zum Ausgleich der Wärmeausdehnung vorgespannt ist.

7. Abgasanlage nach einem der vorhergehenden Ansprüche, **dadurch gekennzeichnet, dass** der Heizdraht (3) katalytisch beschichtet ist.

8. Abgasanlage nach einem der vorhergehenden Ansprüche, **dadurch gekennzeichnet, dass** stromabwärts der Zündvorrichtung eine erste Katalysatoreinrichtung (5) angeordnet ist.

9. Abgasanlage nach Anspruch 8, **dadurch gekennzeichnet, dass** die Zündvorrichtung derart angeordnet ist, dass der Strömungsbereich (300) im wesentlichen dem Querschnitt der Katalysatoreinrichtung (5) entspricht.

10. Abgasanlage nach Anspruch 8 oder 9, **dadurch gekennzeichnet, dass** die Zündvorrichtung derart angeordnet ist, dass sich eine Flammenfront des gezündeten Gasgemischs vor Erreichen der Katalysatoreinrichtung (5) ausbilden kann.

11. Abgasanlage nach Anspruch 8, 9 oder 10, **dadurch gekennzeichnet, dass** die Rahmeneinrichtung (1a, 1b) an ihrem Umfang mit einem Gehäuse (4) verbunden ist.

12. Abgasanlage nach Anspruch 11, **dadurch gekennzeichnet, dass** das Gehäuse (4), eine Aufweitung (40) zur Aufnahme der Rahmeneinrichtung (1a, 1b) aufweist.

13. Abgasanlage nach einem der Ansprüche 8 bis 11, **dadurch gekennzeichnet, dass** stromaufwärts der Zündvorrichtung eine zweite Katalysatoreinrichtung angeordnet ist.

## Claims

1. An exhaust system having an ignition device installed transversely to the flow axis of the exhaust gas, comprising:
a frame arrangement (1a, 1b) onto which a heating wire (3) is wound and which is installable in an exhaust train (4) of the exhaust system transversely to the flow axis of the exhaust gas; and
a current supply means (100, EARTH) for supplying the heating wire with electrical current for generating a predetermined heating-wire temperature;
wherein
the frame arrangement (1a, 1b) defines a flow region (300) in which a heating-wire trellis is provided.

2. An exhaust system according to claim 1, **characterised in that** the frame arrangement (1a, 1b) comprises a first frame (1a) and a spaced second frame (1b) arranged substantially parallel thereto, the heating wire (3) being wound onto said frames alternately.

3. An exhaust system according to claim 1 or 2, **characterised in that** the first frame (1a) can be acted upon by a first electrical potential (V+) by the current supply means (100, EARTH), and the second frame (1b) can be acted upon by a second electrical potential (EARTH).

4. An exhaust system according to claim 3, **characterised in that** the first and second frames (1a, 1b) are separated from one another by a preferably resilient insulating means (2).

5. An exhaust system according to any one of the preceding claims, **characterised in that** the heating wire (3) is threaded through eyes (10) provided on the frame arrangement (1a, 1b).

6. An exhaust system according to any one of the preceding claims, **characterised in that** the heating wire (3) is pre-tensioned by a resilient pre-tensioning means (30) in order to compensate for thermal expansion.

7. An exhaust system according to any one of the preceding claims, **characterised in that** the heating wire (3) is catalytically coated.

8. An exhaust system according to any one of the preceding claims, **characterised in that** a first catalytic means (5) is arranged downstream of the ignition device.

9. An exhaust system according to claim 8, **characterised in that** the ignition device is arranged so that the flow region (300) substantially corresponds to the cross-section of the catalytic means (5).

10. An exhaust system according to claim 8 or 9, **characterised in that** the ignition device is arranged so that a flame front of the ignited gas mixture can form before reaching the catalytic means (5).

11. An exhaust system according to claim 8, 9 or 10, **characterised in that** the frame arrangement (1a, 1b) is connected on its circumference to a housing (4).

12. An exhaust system according to claim 11, **characterised in that** the housing (4) has a widening (40) for accommodating the frame arrangement (1a, 1b).

13. An exhaust system according to any one of claims 8 to 11, **characterised in that** a second catalytic means is arranged upstream of the ignition device.

## Revendications

1. Système d'échappement avec un dispositif d'allumage intégré transversalement à l'axe d'écoulement des gaz brûlés comprenant :
un dispositif de cadre (1a, 1b), qui est enroulé avec un filament chauffant (3) et peut être monté dans un tronçon de gaz brûlés (4) du système d'échappement, transversalement à l'axe d'écoulement des gaz brûlés ; et
un dispositif d'alimentation électrique (100, MASSE) pour l'alimentation du filament chauffant en courant électrique pour générer une température prédéfinie du filament chauffant ;
le dispositif de cadre (1a, 1b) définissant une zone d'écoulement (300) dans laquelle une grille de filament chauffant est prévue.

2. Système d'échappement selon la revendication 1, **caractérisé en ce que** le dispositif de cadre (1a, 1b) comprend un premier cadre (1a) et un second cadre (1b) disposé à distance du premier et sensiblement parallèle à celui-ci, qui sont enroulés alternativement avec le filament chauffant (3).

3. Système d'échappement selon la revendication 1 ou 2, **caractérisé en ce que** le premier cadre (1a) peut être alimenté par le dispositif d'alimentation électrique (100, MASSE) avec un premier potentiel électrique (V+) et le second cadre (1b) avec un second potentiel électrique (MASSE).

4. Système d'échappement selon la revendication 3, **caractérisé en ce que** le premier et le second cadres (1a, 1b) sont séparés l'un de l'autre par un dispositif d'isolation (2) de préférence élastique.

5. Système d'échappement selon l'une quelconque des revendications précédentes, **caractérisé en ce que** le filament chauffant (3) est enfilé par des anneaux (10) prévus sur le dispositif de cadre (1a, 1b).

6. Système d'échappement selon l'une quelconque des revendications précédentes, **caractérisé en ce que** le filament chauffant (3) est prétendu au moyen d'un dispositif de tension (30) élastique pour la compensation de la dilatation thermique.

7. Système d'échappement selon l'une quelconque des revendications précédentes, **caractérisé en ce que** le filament chauffant (3) est revêtu par catalyse.

8. Système d'échappement selon l'une quelconque des revendications précédentes, **caractérisé en ce qu'**un premier système catalyseur (5) est disposé en aval du dispositif d'allumage.

9. Système d'échappement selon la revendication 8, **caractérisé en ce que** le dispositif d'allumage est disposé de telle sorte que la zone d'écoulement (300) correspond sensiblement à la section du système catalyseur (5).

10. Système d'échappement selon la revendication 8 ou 9, **caractérisé en ce que** le dispositif d'allumage est disposé de telle sorte qu'un front de flamme du mélange gazeux allumé peut se former avant d'atteindre le système catalyseur (5).

11. Système d'échappement selon la revendication 8, 9 ou 10, **caractérisé en ce que** le dispositif de cadre (1a, 1b) est relié sur son pourtour à un boîtier (4).

12. Système d'échappement selon la revendication 11, **caractérisé en ce que** le boîtier (4), présente un élargissement (40) pour le logement du dispositif de cadre (1a, 1b).

13. Système d'échappement selon l'une quelconque des revendications 8 à 11 , **caractérisé en ce qu'**un second système catalyseur est disposé en amont du dispositif d'allumage.
